**Europäisches Patentamt**

**European Patent Office**

**Office européen des brevets**

(19)

(11) Veröffentlichungsnummer : **0 408 566 B1**

(12) **EUROPÄISCHE PATENTSCHRIFT**

(45) Veröffentlichungstag der Patentschrift :
15.04.92 Patentblatt 92/16

(51) Int. Cl.⁵ : **B60T 8/50, B60T 8/64**

(21) Anmeldenummer : **89901853.5**

(22) Anmeldetag : **26.01.89**

(86) Internationale Anmeldenummer :
**PCT/EP89/00038**

(87) Internationale Veröffentlichungsnummer :
**WO 89/08574 21.09.89 Gazette 89/23**

(54) **VERFAHREN UND SCHALTUNGSANORDNUNG ZUR STEUERUNG EINER BREMSANLAGE MIT BLOCKIERSCHUTZ- UND/ODER ANTRIEBSSCHLUPFREGELUNG.**

(30) Priorität : **18.03.88 DE 3809100**

(43) Veröffentlichungstag der Anmeldung :
**23.01.91 Patentblatt 91/04**

(45) Bekanntmachung des Hinweises auf die Patenterteilung :
**15.04.92 Patentblatt 92/16**

(84) Benannte Vertragsstaaten :
**DE FR GB**

(56) Entgegenhaltungen :
**EP-A- 0 177 817**
**DE-C- 2 555 005**
**DE-C-28 551 107**
**GB-A- 2 183 763**

(73) Patentinhaber : **ALFRED TEVES GMBH**
**Guerickestrasse 7**
**W-6000 Frankfurt/Main 90 (DE)**

(72) Erfinder : **BLECKMANN, Hans, Wilhelm**
**Karlstrasse 17**
**W-6350 Obermörlen (DE)**
Erfinder : **FENNEL, Helmut**
**Schubertstrasse 9**
**W-6232 Bad Soden (DE)**
Erfinder : **WUPPER, Hans**
**Eichäckerstrasse 10A**
**W-6382 Friedrichsdorf (DE)**
Erfinder : **LATARNIK, Michael**
**Römerstrasse 11**
**W-6382 Friedrichsdorf-Seulberg (DE)**
Erfinder : **KOLBE, Alexander**
**Taunusstrasse 38**
**W-6101 Rossdorf (DE)**

(74) Vertreter : **Blum, Klaus-Dieter, Dipl.-Ing.**
**c/o ALFRED TEVES GMBH Guerickestrasse 7**
**W-6000 Frankfurt/Main 90 (DE)**

## Beschreibung

Die Erfindung bezieht sich auf ein Verfahren zur Steuerung einer Bremsanlage mit Blockierschutz- und-/oder Antriebsschlupfregelung, bei dem das Raddrehverhalten gemessen und aus den Meßwerten durch logische Verknüpfung und Signalver arbeitung Steuersignale zur Regelung des Radschlupfes durch Absenken, Ronstanthalten, und Erhöhen oder Wiedererhöhen des Bremsdruckes abgeleitet werden. Eine Schaltungsanord nung zur Durchführung dieses Verfahrens, die Steuersignale zum Schalten,von in den Druckmittelwegen der Bremsanlage eingefügten Mehrwegeventilen erzeugt, gehört ebenfalls zur Erfindung.

Bremsanlagen mit elektronischer Blockierschutzregelung sind bereits in unterschiedlichen Ausführungsformen auf dem Markt erhältlich. Anlagen zur Antriebsschlupfregelung durch Bremseneingriff sind ebenfalls bekannt. Der Bremsdruck in den Radbremsen der geregelten Räder wird üblicherweise mit Hilfe von elektromagnetisch betätigbaren Mehrwegeventilen, die in den Druckmittelwegen eingefügt sind, moduliert (DE -C2- 19 14 765 und DE -A1- 36 27 566). Durch Schließen die ser Ventile wird der Bremsdruck konstantgehalten, durch öffnen eines Druckmittelweges zu einem Druckausgleichsbe hälter - bei gleichzeitigem Schließen der Druckmittel-Ei nlaßwege - wird Bremsdruck abgebaut. Bei dem bekannten sog. Plunger-Bremssystem erfolgt der Druckabbau durch Volumen vergrößerung einer an die Radbremse angeschlossenen Kammer, in der sich das Druckmittel befindet.

Es werden heutzutage meistens schnell schaltende Mehrwegeventile mit zwei oder drei Schaltstellungen verwendet, wobei die Druckmodulation bzw. die Höhe und die Geschwindig keit der gewünschten Druckänderung in der Radbremse durch pulsierendes Ansteuern der Ventile und Variieren der Puls zahl oder des Pulsdauer/Pulspausen-Verhältnisses erreicht wird.

Die Meßwerte und Informationen zur Bremsdruck- und damit Schlupfregelung werden bei bekannten Systemen ausschließlich mit Radsensoren gewonnen, die elektrische Signale erzeugen, welche das Raddrehverhalten wiedergeben. Durch logische Verknüpfung der von den einzelnen Radsensoren gelie ferten Signale sind Rückschlüsse auf die Fahrzeuggeschwin digkeit, Fahrzeugverzögerung und Beschleunigung usw. möglich. Auf eine direkte Messung des Bremsdruckes in den Radbremsen und/oder im Bremsdruckgeber, die wichtige Informationen für die Bremsschlupfregelung liefern könnte, wird dagegen aus Kostengründen verzichtet. Somit kann die Regellogik nur aus dem Raddrehverhalten auf den Bremsdruck bzw. auf die durch die Ansteuerung der Ventile erreichte Druckänderung schließen. Relativ lange Zeitspannen zur Auswer tung der Informationen, Fehlinterpretationen in bestimmten Situationen und eine entsprechende Beeinträchtigung der Re gelung müssen dabei in Kauf genommen werden.

Aus der Patentanmeldung EP-A1-0 177 817 ist bereits eine Schaltunganordnung für ein Antiblockiersystem bekannt, bei dem der Bremsdruck in der Radbremse gemessen und in die Regelung einbezogen wird. In diesem Zusammenhang wird auch vorgeschlagen, die Druckmessung durch eine Abtastung der Hauptzylinderkolbenwege zu ersetzen, wodurch man natürlich nur einen Meßwert für den Druck im Hauptzylinder, nicht jedoch für den geregelten Druck im Radbremszylinder erhalten kann.

Der Erfindung liegt nun die allgemeine Aufgabe zugrunde, die Regelqualität ohne nennenswerte Erhöhung des Herstel lungsaufwandes zu verbessern. Insbesondere sollte ohne Ver wendung zusätzlicher Sensoren eine für den Regler brauchbare Information über den momentanen, durch die Ventilansteuerung modulierten Bremsdruck in den einzelnen Radbremsen gewonnen werden.

Es hat sich nun gezeigt, daß diese Aufgabe in überraschend einfacher, technisch fortschrittlicher Weise mit einem Verfahren der eingangs genannten Art gelöst werden kann, dessen Besonderheit darin besteht, daß den Druck in den Radbremsen bestimmende Größen gemessen und ausgewertet werden und daß aus diesen Meßgrößen ein Raddruckmodell, das näherungsweise den Druckverlauf in der Radbremse wiedergibt, abgeleitet und bei der Radschlupfregelung bzw. Bremsdruck-Steuerung berücksichtigt wird. Eine Schaltungsanordnung zur Durchführung des Verfahrens ist durch Schaltkreise gekennzeichnet, mit denen die Größen, die den Druck in den Radbremsen bestimmen, meßbar und auswertbar sind und die ein Raddruckmodell bilden, d.h. ein näherungsweise den Druckverlauf in den Radbremsen wiedergebendes Signal erzeugen, das in die Signalverarbeitung zur Erzeugung der Bremsdruck-Steuersignale einbeziehbar ist.

Erfindungsgemäß werden also die gewünschten Informationen über den Druckverlauf durch logische Verknüpfung von Meßwerten und Speicherwerten, nämlich durch die Bildung eines sog. Raddruckmodells, gewonnen. Ohne Druckmeßeinrichtungen oder andere zusätzliche Sensoren wird ein Näherungswert erzeugt, der in die Regelungslogik einbezogen wird und mit dem sich die Regelung erheblich verbessern läßt.

Nach einer vorteilhaften Ausführungsart des erfindungemäßen Verfahrens werden als Größen, die den Druck in den Radbremsen bestimmen, die Ansteuerzeiten von Ventilen in den Druckmitteleinlaß- und/oder -auslaßwegen der Radbremsen unter Berücksichtigung der Bremsdruckaufbau- und Bremsdruckabbaukennlinien der Radbremsen oder des gesamten Systems und unter Berücksichtigung eines die Anfangsbedingungen bzw. den Anfangsdruck beim Einsetzen der Regelung näherungsweise wiedergebenden Wertes gemessen und integriert. Dieser Wert kann z.B. aus der Fahrzeug- und/oder aus der Radbeschleunigung unter Berücksichtigung der Bremskraft- oder Achslastverteilung abgeleitet werden.

Zur Ermittlung des Anfangsdruckes läßt sich auch die Zeitspanne zwischen dem Betätigen der Bremse - dies wird z.B. durch ein Signal des Bremslichtschalters festgestellt - und dem Einsetzen der Regelung auswerten.

Eine vorteilhafte Ausführungsform der erfindungsgemäßen Schaltungsanordnung besteht darin, daß in den Schaltkrei-sen die Bremsdruckaufbau- und die Bremsdruckabbaukennlinien der Radbremsen oder des gesamtem Systems als druckbestimmende Größen gespeichert sind.

Ferner sind bei einer vorteilhaften Schaltungsanordnung die Ansteuerzeiten der Mehrwegeventile meßbar und als den Druck bestimmende Größen auswertbar. Hierzu ist ein Inte- grator vorgesehen, der in Abhängigkeit von den Ansteuersi- gnalen der Mehrwegeventile unter Berücksichtigung der Druckabbau- und Druckaufbaukennlinien und der Anfangsbedingungen das Raddruckmodell bildet.

Schließlich kann die Schaltungsanordnung noch derart aus-gebildet sein, daß die Anfangsbedingungen bzw. den Anfangsdruck beim Einsetzen der Regelung näherungsweise wiedergebende Werte meßbar und als druckbestimmende Größenauswertbar sind.

Weitere Merkmale, Vorteile und Anwendungsmöglichkeiten der Erfindung gehen aus der folgenden Beschreibung anhand der beigefügten Abbildungen und Diagramme hervor.

Es zeigen

Fig. 1 in symbolischer Darstellungsweise den prinzipiellen Aufbau einer Bremsanlage mit Blockierschutz- und Antriebsschlupfregelung,

Fig. 2 eine Druckaufbau- und eine Druckabbaukennlinie einer Radbremse,

Fig. 3 im Diagramm über der Zeit die Ansteuerpulse an ein Einlaßventil (EV) und an ein Auslaßventil im Druckmittelweg einer Radbremse sowie den dadurch hevorgerufenen Druckverlauf während eines Antriebsschlupfregelvorgangs,

Fig. 4 in gleicher Darstellungsweise wie Fig. 2 die Druckaufbau- und Druckabbaukennlinien bei unterschiedlicher Bremskraft,

Fig. 5 die Änderung des Bremsdruckes während des Druckaufbaues und Druckabbaues und

Fig. 6 in Blockdarstellung eine Ausführungsart einer Schaltungsanordnung nach der Erfindung.

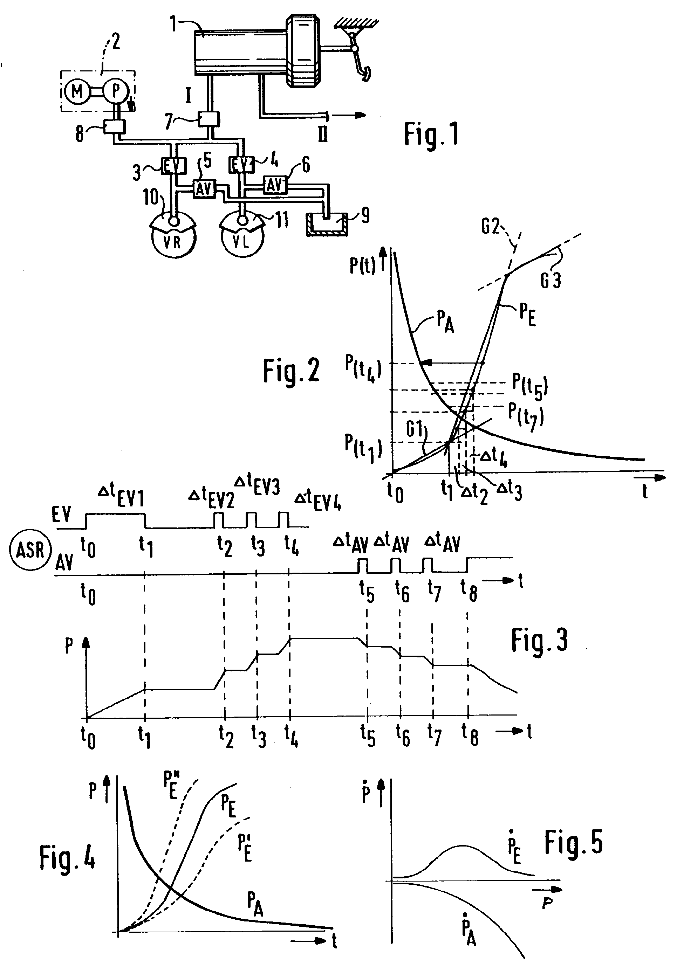

Eine Bremsanlage der in Fig. 1 dargestellten Art, von der allerdings nur die wichtigsten hydraulischen Komponenten und die Bremsdrucksteuer-Ventile gezeigt sind, ist zur Durchführung des erfindungsgemäßen Verfahrens geeignet.

Diese Bremsanlage besteht im wesentlichen aus einem pedalbetätigten Bremsdruckgeber 1 einer Hilfsdruckquelle 2, z.B. einer elektromotorisch angetriebenen Hydraulikpumpe, und aus Mehrwegeventilen 3 bis 8. Es handelt sich hier um einen Bremsdruckgeber mit zwei hydraulisch getrennten Bremskreisen I,II. Zur besseren Übersisht sind allerdings die Anordnung der Vertile und der Anschluß an die Hilfsdruckquelle im zweiten Bremskreis II nicht dargestellt.

Die Ventilpaare 3,5 und 4,6 dienen geweils zur individuellen Modulation des Bremsdruckes in der angeschlossenen Radbremse 10 bzw. 11 des Vorderrades VR bzw. VL. 3,4 sind als Einlaßventile (EV) in der Grundstellung auf Durchlaß geschaltet, während die Auslaßventile (AV) 5 und 6 normalerweise gesperrt sind. Zum Druckabbau werden die Einlaßventile 3,4 gesperrt und Druckmittel aus den Radbremsen über die Auslaßventile 5,6 in einen Druckausgleichsbehälter 9 abgelassen, aus dem das Druckmittel dann wieder in bekannter Weise in die Bremskreise zurückgeführt wird.

Mit Hilfe der Ventile 7 und 8 kann die Hilfsdruckquelle 2 anstelle des Bremsdruckgebers 1 an die Radbremsen angeschlossen werden. Beispielsweise wird zur Antriebsschlupfregelung, auf die sich Fig. 3 bezieht, die Hydraulikpumpe der Hilfsdruckquelle 2 eingeschaltet und über das Ventil 8 Druckmittel in die Radbremse des zum Durchdrehen neigenden Rades VR und/oder VL eingesteuert. Durch Umschalten des Einlaßventils 7 wird bei diesem Regelmodus ein Abfließen von Druckmittel über den Bremsdruckgeber 1 verhindert.

Der Druckverlauf und die Druckänderungen über der Zeit sind, wie die Fig. 2, 4 und 5 veranschaulichen, nicht linear, sondern folgen bestimmten, von der Konstruktion der Radbremse und des gesamten Systems abhängigen Kennlinien. Eine typische Füllkurve bzw. Druckaufbaukennlinie $p_E$ sowie eine typische Druckabbaukennlinie $p_A$ zeigen Fig. 2 und Fig. 4. Da der Druckaufbau, insbesondere die Steilheit der Rennlinie, natürlich auch von der Kraft, die über das Pedal auf den Bremsdruckgeber 1 ausgeübt wird, abhängig ist, symbolisiert die Kurve $p_E$ in Fig. 2 nur einen Mittelwert. Bei einer geringeren Pedalkraft ($p'_E$) und einer höheren Pedalkraft ($p''_E$) gelten die Druckaufbaukennlinien $p'_E$ und $p''_E$ gemäß Fig. 4. Für die Druckabbaukennlinie $p_A$ gibt es eine solche Abhängigkeit nicht, da das Druckmittel in der Druckabbauphase stets über ein vollständig geöffnetes Auslaßventil 5 oder 6 in einem unter Atmosphärendruck stehenden Druckausgleichsbehälter 9 abgelassen wird.

Die in Fig. 2 dargestellte Druckaufbaukennlinie $p_E$ gilt in vorliegendem Fall auch für die Einspeisung von

3

Hilfsdruck aus der Quelle 2 bei nicht betätigtem Bremsdruckgeber 1. Während eines Antriebsschlupfregelvorganges liegt diese Situation vor.

Den Druckverlauf in Abhängigkeit von der Ansteuerung eines Einlaß- und Auslaßventilpaares EV,AV unter Zugrundelegung der Druckaufbau- und Druckabbaukennlinien nach Fig. 2 während eines Antriebsschlupfregelvorganges (ASR) zeigt Fig. 3. In der Anfangszeitspanne zwischen $t_O$ und $t_1$ ist der Druckanstieg relativ flach, während in den anschließenden, relativ kurzen Zeitspannen $\Delta t_{EV2}$, $\Delta t_{EV3}$ und $\Delta t_{EV4}$ der steile Bereich der Druckaufbaukennlinie $p_E$ zur Geltung gelangt. Durch kurzzeitiges Öffnen des Auslaßventiles AV für die Zeitspannen $\Delta t_{AV}$ wird ein Druckabbau entsprechend der Druckabbaukennlinie $p_A$ erreicht. Ab dem Zeitpunkt $t_8$ bleibt das Auslaßventil AV so lange auf, daß trotz des relativ flachen Verlaufs der Druckabbaukennlinie $p_A$ ein vollständiges Lösen der Radbremse erreicht wird.

Die zeitliche Änderung des Druckverlaufs während des Druckaufbaues ($\dot{p}_E$) und während es Druckabbaues ($\dot{p}_A$) veranschaulicht Fig.5.

Erfindungsgemäß wird nun zur Bestimmung und Auswertung des Druckes in den Radbremsen 10,11 ein Raddruckmodell gebildet, das näherungsweise den Druckverlauf in den Radbremsen wiedergibt. Hierzu werden die Ansteuerzeiten der Einlaß- und Auslaßventile 3 bis 6 ermittelt und unter Berücksichtigung der Druckaufbau- und Druckabbaukennlinien integriert. Dabei dürfte es z.B. genügen, die Druckaufbaukennlinie $p_E$ nach Fig. 2 durch drei Geraden unterschiedlicher Steigung anzunähern, wie dies in Fig. 2 durch die Geraden G1,G2 und G3 angedeutet ist. Eine ähnliche Unterteilung der Druckabbaukennlinie $p_A$ ist ebenfalls möglich.

Während bei einer Antriebsschlupfregelung gemäß Fig. 3 zum Zeitpunkt $t_O$ noch kein Druck herrscht, müssen bei einer Blockierschutzregelung zusätzlich die Anfangsbedingungen, nämlich der Druck beim Einsetzen der Blockierschutzregelung bzw. beim Ansteuern der Ventilpaare EV/AV berücksichtigt werden. Erfindungsgemäß wird aus verschiedenen Kriterien, u.a. aus der Fahrzeugverzögerung beim Einsetzen der Blockierschutzregelung, aus der Zeitspanne zwischen dem Betätigen der Bremse und dem Einsetzen der Regelung und aus anderen Kriterien ein den Anfangsdruck wiedergebender Wert ermittelt und in die Regelung bzw. in die Berechung einbezogen.

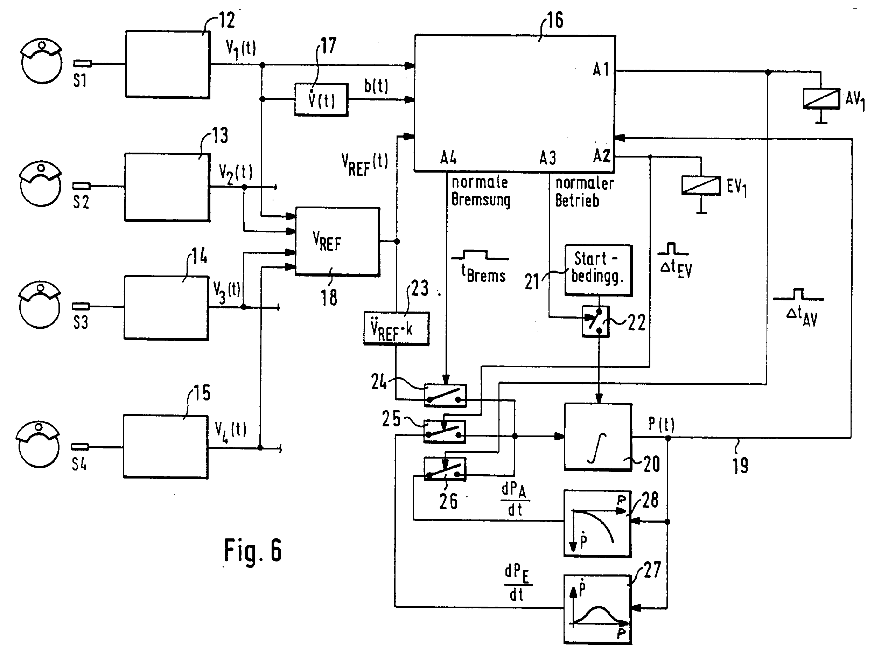

Fig. 6 zeigt eine Schaltungsanordnung zur Durchführung des erfindungsgemäßen Verfahrens. Sie besteht aus folgenden Komponenten:

Das Drehverhalten der einzelnen Fahrzeugräder wird mit Hilfe von Sensoren S1 bis S4 ermittelt. Das Ausgangssignal dieser Sensoren wird zunächst mit Hilfe von Triggerschaltungen, Wandlern und dergl., die durch die Schaltkreise 12 bis 15 symbolisiert sind, aufbereitet. Die Ausgangssignale dieser Schaltkreise, die die jeweiligen Radgeschwindigkeiten $v_i(t)$ bis $v_4(t)$ wiedergeben, werden zu einer Regellogik 16 weitergeleitet. Außerdem wird durch Differenzieren der Radgeschwindigkeit die Verzögerung bzw. Beschleunigung (b(t)) mit Hilfe von Differenzierstufen 17 (die entsprechenden, gleichartigen Blöcke für die aufbereiteten Sensorsignale S2 bis S4 sind der Einfachheit halber nicht dargestellt) gebildet. Die entsprechenden Signale werden ebenfalls der Regellogik 16 zugeführt. Schließlich wird durch Vergleich und logische Verknüpfung der Radgeschwindigkeitssignale in einem Referenz-Schaltkreis 18 die sogen. Referenzgeschwindigkeit abgeleitet, die als Bezugsgröße zur Ermittlung des Radschlupfes bzw. des Drehverhaltens der einzelnen Räder ebenfalls benötigt wird.

Die Ausgänge A1 und A2 der Regellogik 16 führen direkt zu dem Einlaß-/Auslaßventilpaar $EV_1/AV_1$ eines individuell oder gemeinsam mit anderen regelbaren Rades.

Das den Druckverlauf p(t) bzw. das Raddruckmodell wiedergebende Signal steht am Ausgang eines Integrators 20 an und wird über einen Signalweg 19 in die Regellogik 16 eingespeist. Beinormaler Fahrt, die über einem Ausgang A3 der Regellogik 16 signalisiert wird, werden bestimmten Start- oder Anfangsbedingungen über den Schaltkreis 21 gesetzt gehalten. nach einer Regelung wird der Integrator über den Schaltkreis 21 in seine Anfangslage zurückgesetzt.

Über den Ausgang A4 der Regellogik 16 wird dagegen normale, d.h. ungeregelte, Bremsung signalisiert. Über einen Differenzierkreis 23 und einen Schalter 24 wird ein Signal, das die Änderung der Fahrzeugverzögerung wiedergibt, im Integrator 20 verarbeitet. Im vorliegenden Fall wird die zweite zeitliche Ableitung $\ddot{v}_{REF}$ nach Multiplikation mitdem Faktor k, der u.a. von der Achslastverteilung abhängig ist, zur Bestimmung des Integratorinhalts und damit z.B. des Anfangsdruckes beim Beginn einer Regelung ausgewertet.

Das Einsetzen einer Blockierschutzregelung wird in dem hier geschilderten Ausführungsbeispiel von den an den Ausgängen A1,A2 der Regellogik 16 anstehenden Betätigungssignalen der Auslaß- und Einlaßventile $AV_1$ bzw. EV abgeleitet. Eine Ansteuerung der Ventile $EV_1/AV_1$ führt zum Schließen von Schaltern 25,26 für die Dauer der Ventilansteuersignale und dadurch zum Eingeben der in den Differenzierstufen 27 bzw. 28 gebildeten Druck-Differentialquotienten $dp_E/dt$ bzw. $dp_A/dt$ in den Eingang des Integrators 20. Auf diese Weise wird aus den Ansteuerzeiten der Einlaß- und Auslaßventile unter Berücksichtigung der Bremsdruckaufbau- und Bremsdruckabbaukennlinien, die in den Differenzierstufen 27,28 gespeichert sind, und unter Berücksichtigung der Anfangsbedingungen, die über die Stufe 23 und den Schafter 24 eingegeben werden, mit Hilfe des Integrators 20 ein Raddruckmodell gebildet und eine entsprechende Information über die Signalleitung 19 zur Regellogik 16 zurückgeführt. Der Ausgang des Integrators 20 liefert stets ein Abbild des in der zugehörigen Radbremse oder in dem Bremssystem herrschenden Druckes und damit eine wichtige Information für die Blockierschutz- oder Antriebsschlupfregelung bzw. zur Einstellung eines in Hinsicht auf die Regelung optimalen Bremsdrucks.

## Patentansprüche

1. Verfahren zur Steuerung einer Bremsanlage mit Bloclierschutz- und/oder Antriebsschlupfregelung, bei dem das Raddrehverhalten gemessen und aus den Meßwerten durch logische Verknüpfung und Signalverarbeitung Steuersignale zur Regelung des Radschlupfes durch Absenken, Konstanthalten, und Erhöhen oder Wiedererhöhen des Bremsdruckes abgeleitet werden, dadurch **gekennzeichnet**, daß den Druck in den Radbremsen (10,11) bestimmende Größen ($\Delta t_{EV}, \Delta t_{AV}$) gemessen und ausgewertet werden und daß aus diesen Meßgrößen ein Raddruckmodell (p(t)), das näherungsweise den Druckverlauf in den Radbremsen (10,11) wiedergibt, abgeleitet und bei der Radschlupfregelung bzw. Bremsdruck-Steuerung berücksichtigt wird.

2. Verfahren nach Anspruch 1, dadurch **gekennzeichnet**, daß als Größen, die den Druck in den Radbremsen (10,11) bestimmen, die Ansteuerzeiten ($\Delta t_{EV}, \Delta t_{AV}$) von Ventilen (EV,AV) in den Druckmitteleinlaß- und/oder -auslaßwegen der Radbremsen (10,11) unter Berücksichtigung der Bremsdruckaufbau- und Bremsdruckabbaukennlinien der Radbremsen oder des gesamten Systems und unter Berücksichtigung eines die Anfangsbedingungen bzw. den Anfangsdruck beim Einsetzen der Regelung näherungsweise wiedergebenden Wertes gemessen und integriert werden.

3. Verfahren nach Anspruch 2, dadurch **gekennzeichnet**, daß der den Anfangsdruck wiedergebenden Wert aus der Fahrzeug- und/oder aus der Radbeschleunigung unter Berücksichtigung der Bremskraft- oder Achslastverteilung abgeleitet wird.

4. Verfahren nach Anspruch 2 oder 3, dadurch **gekennzeichnet**, daß zur Ermittlung des Anfangsdruckes die Zeitspanne zwischen dem Betätigen der Bremse und dem Einsetzen der Regelung ausgewertet wird.

5. Schaltungsanordnung zur Durchführung des Verfahrens nach einem der Ansprüche 1 bis 4, für eine Bremsanlage mit Blockierschutz- und/oder Antriebsschlupfregelung, mit Sensoren (S1 - S4) zur Messung des Raddrehverhaltens und mit elektronischen Schaltkreisen (12 - 18) zur Auswertung der Sensorsignale und zur Erzeugung von Bremsdruck-Steuersignalen, mit denen in den Druckmittelwegen eingefügte Mehrwegeventile (3 - 6) schaltbar sind, dadurch **gekennzeichnet**, daß Schaltkreise (20 bis 28) vorhanden sind, mit denen die Größen, die den Druck in den Radbremsen (10,11) bestimmen, meßbar und auswertbar sind und die ein Raddruckmodell (p(t)) bilden bzw. ein näherungsweise den Druckverlauf in den Radbremsen (10,11) wiedergebendes Signal (p(t)) erzeugen, das in die Signalverarbeitung zur Erzeugung der Bremsdruck-Steuersignale ($\Delta t_{EV}, \Delta t_{AV}$) einbeziehbar ist.

6. Schaltungsanordnung nach Anspruch 5, dadurch **gekennzeichnet**, daß in den Schaltkreisen (27,28) die Bremsdruckaufbau- und die Bremsdruckabbaukennlinien ($p_A, p_E$) der Radbremsen (10,11) oder des Systems als druckbestimmende Größen gespeichert sind.

7. Schaltungsanordnung nach Anspruch 5 oder 6, dadurch **gekennzeichnet**, daß die Ansteuerzeiten ($\Delta t_{EV}, \Delta t_{AV}$) der Mehrwegeventile (EV,AV) meßbar und als den Druck bestimmende Größen auswertbar sind.

8. Schaltungsanordnung nach Anspruch 7, dadurch **gekennzeichnet**, daß diese einen Integrator (20) aufweist, der in Abhängigleit von den Ansteuersi-gnalen ($\Delta t_{EV}, \Delta t_{AV}$) der Mehrwegeventile (AV,EV) unter Berücksichtigung der Druckabbau- und Druckaufbaulennlinien (27,28) und der Anfangsbedingungen (23) das Raddruckmodell (p(t)) bildet.

9. Schaltungsanordnung nach einem der Ansprüche 5 bis 8, dadurch **gekennkeichnet**, daß die Anfangsbedingungen bzw. den Anfangsdruck beim Einsetzen der Regelung näherungsweise wiedergebende Werte meßbar und als druckbestimmende Größen auswertbar sind.

## Claims

1. A method of controlling a brake system with anti-lock control and/or traction slip control, wherein the wheel rotational behaviour is measured and control signals are derived from the measured values by logical combining and by signal processing, the said control signals serving to regulate the wheel slip by decreasing, maintaining constant and increasing or re-increasing the braking pressure, **characterized** in that quantities ($\Delta t_{EV}, \Delta t_{AV}$) determining the pressure in the wheel brakes (10, 11) are measured and evaluated, and in that from these measured quantities a wheel pressure pattern (p(t)) which, by approximation, represents the pressure

EP 0 408 566 B1

variation in the wheel brakes (10, 11) is derived and taken into consideration during wheel slip control and/or braking pressure control.

2. A method as claimed in claim 1, **characterized** in that the intervals of excitation ($\Delta t_{EV}$, $\Delta t_{AV}$) of valves (EV, AV) in the pressure-fluid inlet conduits and/or outlet conduits of the wheel brakes (10, 11) are measured and integrated as quantities determining the pressure in the wheel brakes (10, 11) in consideration of the braking-pressure-increase and braking-pressure-decrease characteristic curves of the wheel brakes or of the entire system and in consideration of a value representing, by approximation, the initial conditions and/or the initial pressure upon commencement of the control.

3. A method as claimed in claim 2, **characterized** in that the value indicative of the initial pressure is derived from the vehicle acceleration and/or from the wheel acceleration in consideration of the brake force distribution or axle load distribution.

4. A method as claimed in claim 2 or 3, **characterized** in that the time span between the application of the brake and the commencement of the control is evaluated for determining the initial pressure.

5. A circuit configuration for implementing this method as claimed in any one of the claims 1 to 4, destined for a brake system with anti-lock and/or traction slip control, with sensors (S1 to S4) for measuring the wheel rotational behaviour and with electronic circuits (12 to 18) for assessing the sensor signals and for generating braking-pressure control signals permitting to switch multiple-way valves (3 to 6) inserted into the pressure-fluid conduits, **characterized** in that circuits (20 to 28) are provided which serve to measure and assess the quantities determining the pressure in the wheel brakes (10, 11), and which form a wheel pressure pattern (p(t)) and, respectively, generate a signal (p(t)) which, by approximation, represents the pressure variation in the wheel brakes (10, 11) and which can be taken into account in the signal processing for generating the braking-pressure control signals ($\Delta t_{EV}$, $\Delta t_{AV}$).

6. A circuit configuration as claimed in claim 5, **characterized** in that the braking-pressure increase and the braking-pressure-decrease characteristic curves ($p_A$, $p_E$) of the wheel brakes (10, 11) or of the system are memorized as pressure-determining quantities in the circuits (27, 28).

7. A circuit configuration as claimed in claim 5 or 6, **characterized** in that the periods of excitation ($\Delta t_{EV}$, $\Delta t_{AV}$) of the multiple-way valves (EV, AV) are measurable and assessable as quantities determining the pressure.

8. A circuit configuration as claimed in claim 7, **characterized** in that the latter comprises an integrator (20) which forms the wheel pressure pattern (p(t)) in dependence upon the actuation sigals ($\Delta t_{EV}$, $\Delta t_{AV}$) of the multiple-way valves (AV, EV) in consideration of the pressure-decrease and pressure-increase characteristic curves (27, 28) and of the initial conditions (23).

9. A circuit configuration as claimed in any one of the claims 5 to 8, **characterized** in that values which, by approximation, represent the initial conditions, and, respectively, the initial pressure upon the commencement of the control are measurable and assessable as pressure-determining quantities.


**Revendications**

1. Procédé pour commander une installation de freinage comportant un système de régulation d'antiblocage et/ou de patinage, et selon lequel on mesure le comportement en rotation des roues et on obtient, à partir des valeurs de mesure, par combinaison logique et traitement des signaux, des signaux de commande servant à régler le patinage de la roue grâce à une réduction, au maintien et à un accroissement ou à un nouvel accroissement de la pression de freinage, caractérisé en ce qu'on mesure et on évalue des grandeurs ($\Delta t_{EV}$, $\Delta t_{AV}$), qui déterminent la pression dans les freins de roue (10, 11) et qu'à partir de ces grandeurs de mesure, on obtient un modèle de la pression de roue (p(t)), qui reproduit approximativement l'allure de la pression dans les freins de roue (10,11), et on tient compte de ce modèle lors de la régulation du patinage de roues ou lors de la commande de la pression de freinage.

2. Procédé selon la revendication 1, caractérisé en ce qu'on mesure et on intègre comme grandeurs, qui déterminent la pression dans les freins de roue (10,11), les durées de commande ($\Delta t_{EV}$, $\Delta t_{AV}$) de soupapes (EV,AV) situées dans les canalisations d'admission et/ou de sortie du fluide sous pression des freins de roue (10,11), en tenant compte des courbes caractéristiques d'accroissement et de réduction de la pression de freinage des freins de roue ou de l'ensemble du système et en tenant compte d'une valeur reproduisant approximativement les conditions de départ ou la pression initiale lors du déclenchement de la régulation.

3. Procédé selon la revendication 2, caractérisé en ce qu'on obtient la valeur reproduisant la pression de départ à partir de l'accélération du véhicule et/ou à partir de l'accélération des roues, en tenant compte de la distribution de la force de freinage ou de la charge d'essieu.

4. Procédé selon la revendication 2 ou 3, caractérisé en ce que pour déterminer la pression de départ, on

6

évalue l'intervalle de temps entre l'actionnement des freins et le déclenchement de la régulation.

5. Montage pour la mise en oeuvre du procédé selon l'une des revendications 1 à 4, pour une installation de freinage avec régulation d'antiblocage et/ou du patinage, comportant des capteurs (S1-S4) servant à mesurer le comportement en rotation des roues et des circuits électroniques (12-18) servant à évaluer les signaux de capteurs et à produire des signaux de commande de la pression de freinage, à l'aide desquels des soupapes à plusieurs voies (3-6), insérées dans les canalisations du fluide sous pression, peuvent être commutées, caractérisé en ce qu'il est prévu des -circuits (20 à 28), à l'aide desquels les grandeurs, qui déterminent la pression dans les freins de roues (10,11), peuvent être mesurées et évaluées et qui forment un modèle de pression de roue (p(t)) ou produisent un signal (p(t)) qui représente approximativement la variation de la pression dans les freins de roues (10,11) et qui peut être'introduit dans le traitement des signaux pour la production des signaux ($\Delta t_{EV}$, $\Delta t_{AV}$) de commande de la pression de freinage.

6. Montage suivant la revendication 5, caractérisé par le fait que les courbes caractéristiques ($p_A$, $p_E$) de montée et de réduction de la pression de freinage des freins de roues (10,11) ou du système sont mémorisées sous la forme de grandeurs déterminant la pression, dans les circuits (27,28).

7. Montage suivant la revendication 5 ou 6, caractérisé par le fait que les durées de commande ($\Delta t_{EV}$, $\Delta t_{AV}$) des soupapes à plusieurs voies (EV,AV) peuvent être mesurées et évaluées en tant que grandeurs déterminant la pression.

8. Montage selon la revendication 7, caractérisé en ce qu'il comporte un intégrateur (20), qui forme, en fonction des signaux de commande ($\Delta t_{EV}$, $\Delta t_{AV}$) des soupapes à plusieurs voies (AV,EV), le modèle de pression de roue (p(t)), en tenant compte des courbes caractéristiques (27,28) de montée et de réduction de la pression et des conditions initiales (23).

9. Montage suivant l'une des revendications 5 à 8, caractérisé par le fait que les valeurs reproduisant approximativement les conditions de départ ou la pression de départ lors de l'actionnement de la régulation, peuvent être mesurées et évaluées en tant que grandeurs déterminant la pression.

EP 0 408 566 B1

Fig.1

Fig.2

Fig.3

Fig.4

Fig.5

Fig. 6